# EUROPEAN PATENT SPECIFICATION

(11) **EP 2 770 790 B1**
(45) Date of publication and mention of the grant of the patent: **06.04.2016**
(21) Application number: 12855357.5
(22) Date of filing: 23.11.2012
(51) Int. Cl.: H04W 74/08

(54) **METHOD AND DEVICE FOR INDICATING TRANSMISSION TIME INTERVAL**
VERFAHREN UND VORRICHTUNG ZUR ANZEIGE VON ÜBERTRAGUNGSZEITINTERVALLEN
PROCÉDÉ ET DISPOSITIF PERMETTANT D'INDIQUER UN INTERVALLE DE TEMPS DE TRANSMISSION

(30) Priority: 09.12.2011 CN 201110409239
(43) Date of publication of application: 27.08.2014
(73) Proprietor: Huawei Technologies Co., Ltd., Longgang District Shenzhen, Guangdong 518129 (CN)
(72) Inventor: HE, Chuanfeng, Shenzhen Guangdong 518129 (CN)
(74) Representative: Thun, Clemens
(86) International application number: PCT/CN2012/085111
(87) International publication number: WO 2013/083001

(56) References cited:
- CN-A- 101 505 522
- CN-A- 101 911 811
- CN-A- 101 978 756
- ALCATEL-LUCENT ET AL: "Node B TTI indication for 2/10 ms TTI concurrent operations in CELL_FACH", 3GPP DRAFT; R2-115866 - REL-11 FE-FACH - NB TTI INDICATION FOR 2-10 MS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 7 November 2011 (2011-11-07), XP050564159, [retrieved on 2011-11-07]
- ALCATEL-LUCENT ET AL: "On the common E-DCH resource in 2/10 ms TTI concurrent operation", 3GPP DRAFT; R2-115097 - REL-11 FE-FACH - 2 & 10 MS TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540791, [retrieved on 2011-10-03]
- "3rd Generation Partnership Project; Technical Specification Group Radio Access Network; Physical channels and mapping of transport channels onto physical channels (FDD) (Release 10)", 3GPP STANDARD; 3GPP TS 25.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 17 September 2010 (2010-09-17), pages 1-58, XP050442090, [retrieved on 2010-09-17]
- QUALCOMM INCORPORATED.: 'On concurrent deployment of 2ms and 10ms TTI in a cell in CELL_FACH.' R2-114932. 3GPP TSG RAN WG2 MEETING #75-BIS. 10 October 2010 - 14 October 2010, XP050540905

## Description

### TECHNICAL FIELD

The present invention relates to the field of communication technologies, and in particular, to a method and an apparatus for indicating a transmission time interval.

### BACKGROUND

A 3GPP (3rd Generation Partnership Project) WCDMA (wideband code division multiple access) R8 introduces an enhanced uplink feature, that is, allowing a UE (user equipment) in CELL-FACH (cell forward access channel) and idle states to obtain E-DCH (enhanced dedicated channel) resources through enhanced random access to replace the RACH (random access channel) in an R99 to implement uplink transmission, so as to reduce the uplink transmission delay of the UE and improve the uplink transmission rate.

In the R8, TTI (transmission time interval) types of E-DCH uplink transmission of the UE in the CELL-FACH and idle states include two types: 10ms TTI and 2ms TTI, and the E-DCH respectively uses the 10ms and 2ms transmission time intervals to perform uplink transmission. In the R8, the TTI types are configured by the network side, and each cell is fixedly configured with one TTI type. When the UE in the CELL-FACH and idle states initiates enhanced uplink access, E-DCH transmission uses the TTI type configured in the cell where the E-DCH is located.

In the R8, after a base station detects a preamble signature (access preamble signature) sent by a UE, the base station indicates common (common) E-DCH resources to the UE through an AICH (Acquisition Indicator Channel, acquisition indicator channel) and the specific procedure is as follows: When the UE detects that the value of an AI (Acquisition Indicator, acquisition indicator) carried by the AICH and corresponding to the sent signature (signature) is +1, it indicates that the base station instructs the UE to use default common E-DCH resources associated with the signature. When the UE detects that the value of the AI carried by the AICH and corresponding to the sent signature is -1, the UE judges whether the cell is configured with an EAI (Extended Acquisition Indicator, extended acquisition indicator); and if so, a common E-DCH resource index is obtained by detecting the EAI; or if not, it indicates that the base station NACK (rejects) the access request of the UE, and the UE ends the access process.

In an R11, the CELL-FACH state is continuously enhanced, including allowing the two TTI types of 10ms TTI and 2ms TTI to coexist. A UE decides, according to information such as a measurement result and data amount sent on the uplink, the TTI type to be used. Meanwhile, signatures of preambles sent by UEs initiating access are classified, where a part of signatures are used by UEs selecting the 10ms TTI for sending, and a part of signatures are used by UEs selecting the 2ms TTI for sending. The base station knows, according to a detected preamble signature, the TTI type of the E-DCH resources requested by a UE. The UE selects a TTI type and a signature in a signature set corresponding to the TTI type to initiate access. When a Node B (base station) detects the preamble of the UE, the NodeB decides, according to situations such as uplink interference and resource allocation, whether the UE is allowed to use the requested TTI length, and then indicates, in a certain mode, to the UE whether the UE is allowed to use the requested TTI length, for example, the common E-DCH resources used by the UE and TTI type information are indicated through the AICH. In addition, in the process, if the Node B discovers, in some cases, that no common E-DCH resource can be allocated, the Node B may indicate the UE to perform a fallback, and the UE executes a fallback operation, and performs PRACH (physical random access channel) access in an R99 mode.

When the base station detects the preamble signature sent by the UE, the base station, by using an AICH response and the AICH value and EAI configured, judges and indicates whether the TTI type used by the UE is 2ms TTI or 10ms TTI. The specific indication process is:
when the acquisition indicator AI is +1 and no EAI is configured, indicating that the UE uses associated default resources and the TTI type requested by the UE;
when the acquisition indicator AI is +1 and the EAI is configured, indicating, through the EAI, the resource index used by the UE and another TTI type different from the TTI type requested by the UE;
when the acquisition indicator AI is -1 and no EAI is configured, indicating rejection of the access request of the UE, namely, NACK (negative acknowledgement); and
when the acquisition indicator AI is -1 and the EAI is configured, indicating, through the EAI, the resource index used by the UE and the TTI type requested by the UE. This can be, for example, seen from XP 050564159.

In the process of implementing embodiments of the present invention, the prior art has the following disadvantages: According to the above solution, the TTI type used by the UE is indicated by judging the AICH value and EAI configured (configured). For the judging condition of EAI configured, because the EAI is configured at the cell level, for R11 system the cell is configured with the EAI, and the judging condition of EAI configured is always YES (yes). In other words, no matter whether the AICH value is +1 or -1, an R11 UE needs to read the EAI to obtain resources; even though the associated default resources are idle, the resources need to be indicated through the EAI, and resources can be indicated for only one UE through the EAI. Therefore, when the Node B needs to respond to access of multiple R11 UEs supporting TTI selection, the Node B cannot directly instruct, through the AI, the multiple R11 UEs to obtain default resources, and can only indicate the UEs one by one through the EAI, and the UEs not instructed need to resend a preamble to wait for the acquisition indicator of the base station. Therefore, the solution causes a longer UE access delay, and because the number of preambles to be sent by the UE increases, extra interference is also caused to the uplink.

### SUMMARY

Embodiments of the present invention provide a method and an apparatus for indicating a transmission time interval, which are used to reduce the UE access delay, reduce the number of preambles sent by the UE, and reduce interference on the uplink.

A method for indicating a transmission time interval includes:
receiving an access preamble from a user equipment (UE), where the access preamble carries a signature; and
determining whether a cell where the UE is located is configured with an extended acquisition indicator (EAI), and sending, on an acquisition indicator channel (AICH) of an access timeslot corresponding to an access timeslot where the access preamble is received, an acquisition indicator (AI) corresponding to the signature of the access preamble; where
if a value of the AI is a first value, default resources associated with the signature of the access preamble which are used by the UE and a transmission time interval (TTI) type requested by the UE are allocated and indicated, or default resources associated with the AI corresponding to the signature of the access preamble which are used by the UE and a TTI type requested by the UE are allocated and indicated, wherein the method further comprises: if the cell where the UE is located is configured with an EAI and the value of the AI is a second value being different from the first value, sending an EAI to the UE to indicate rejection of the access request of the UE, or allocate and indicate a resource index used by the UE and a TTI type, or indicate the UE to execute a fallback operation,
wherein the sending an EAI to the UE to indicate rejection of the access request of the UE, or allocate and indicate a resource index used by the UE and a TTI type, or indicate the UE to execute a fallback operation comprises:
sending two EAIs to the UE, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

A method for indicating a transmission time interval includes:
sending an access preamble to a base station, where the access preamble carries a signature; and determining whether a cell where a user equipment (UE) is located is configured with an extended acquisition indicator (EAI); and
receiving, on an acquisition indicator channel (AICH) of an access timeslot corresponding to an access timeslot where the access preamble is sent, an acquisition indicator (AI) from the base station and corresponding to the signature of the access preamble; where
if a value of the AI is a first value, default resources associated with the signature of the access preamble which are used by the UE and a transmission time interval (TTI) type requested by the UE are indicated, or default resources associated with the AI corresponding to the signature of the access preamble which are used by the UE and a TTI type requested by the UE are allocated and indicated, wherein the method further comprises: if the cell where the UE is located is configured with an EAI and the value of the AI is a second value being different from the first value, receiving an EAI which indicates rejection of the access request of the UE, or indicates a resource index used by the UE and a TTI type, or instructs the UE to execute a fallback operation,
wherein the receiving an EAI which indicates rejection of the access request of the UE, or indicates a resource index used by the UE and a TTI type, or instructs the UE to execute a fallback operation comprises:
   receiving two EAIs, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

A base station includes:
a preamble receiving unit, configured to receive an access preamble from a user equipment (UE), where the access preamble carries a signature;
a configuration determining unit, configured to determine whether a cell where the UE is located is configured with an extended acquisition indicator (EAI); and
an indicator sending unit, configured to send, on an acquisition indicator channel (AICH) of an access timeslot corresponding to an access timeslot where the access preamble is received, an acquisition indicator (AI) corresponding to the signature of the access preamble; where
if a value of the AI is a first value, default resources associated with the signature of the access preamble which are used by the UE and a transmission time interval (TTI) type requested by the UE are allocated and indicated, or default resources associated with the AI corresponding to the signature of the access preamble which are used by the UE and a TTI type requested by the UE are allocated and indicated, wherein:
   if the cell where the UE is located is configured with an EAI and the value of the AI is a second value being different from the first value, the indicator sending unit is configured to send an EAI to the UE to indicate rejection of the access request of the UE, or allocate and indicate a resource index used by the UE and a TTI type, or indicate the UE to execute a fallback operation, comprises:
      the indicator sending unit is configured to send two EAIs, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

A user equipment includes:
a preamble sending unit, configured to send an access preamble to a base station, where the access preamble carries a signature;
a configuration determining unit, configured to determine whether a cell where the user equipment (UE) is located is configured with an extended acquisition indicator (EAI); and
an indicator receiving unit, configured to receive, on an acquisition indicator channel (AICH) of an access timeslot corresponding to an access timeslot where the access preamble is sent, an acquisition indicator (AI) from the base station and corresponding to the signature of the access preamble; where
if a value of the AI is a first value, default resources associated with the signature of the access preamble which are used by the UE and a transmission time interval (TTI) type requested by the UE are indicated, or default resources associated with the AI corresponding to the signature of the access preamble which are used by the UE and a TTI type requested by the UE are allocated and indicated, wherein if the cell where the UE is located is configured with an EAI and the value of the AI is a second value being different from the first value, the indicator receiving unit is configured to receive an EAI which indicates rejection of the access request of the UE, or indicates a resource index used by the UE and a TTI type, or instructs the UE to execute a fallback operation is received index, comprises:
   the indicator receiving unit is configured to receive one EAI, wherein if the EAI is NACK, the EAI is used to indicate rejection of the access request of the UE, or if the EAI is not NACK, the EAI is used to indicate a resource index used by the UE and mapped by the EAI and the TTI type requested by the UE; and
   the indicator receiving unit is configured to receive two EAIs, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

As seen from the above technical solutions, the embodiments of the present invention have the following advantages: By determining whether a cell is configured with an EAI, one AI or EAI is used to indicate whether the access request of the UE is rejected, and indicate the TTI type, indicate the resource index used by the UE, indicate the UE to execute a fallback operation, and indicate the UE to use default resources. Therefore, the problem that the judging condition of EAI configured is always YES (yes) is solved; the UE access delay may be reduced; the number of preambles sent by the UE may be reduced; and interference on the uplink may be reduced.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some of the embodiments of the present invention, and persons of ordinary skill in the art may still derive other drawings from these accompanying drawings without creative efforts.
FIG. 1 is a schematic flowchart of a method according to an embodiment of the present invention;
FIG. 2 is a schematic flowchart of another method according to an embodiment of the present invention;
FIG. 3 is a schematic flowchart of a sequence for executing a method according to an embodiment of the present invention;
FIG. 4 is a schematic structural diagram of a base station according to an embodiment of the present invention;
FIG. 5 is a schematic structural diagram of a user equipment according to an embodiment of the present invention; and
FIG. 6 is a schematic structural diagram of a system according to an embodiment of the invention.

### DESCRIPTION OF EMBODIMENTS

To make the objectives, technical solutions, and advantages of the present invention more comprehensible, the following further describes the present invention with reference to the accompanying drawings. Apparently, the embodiments described herein are merely a part rather than all of the embodiments of the present invention. All other embodiments obtained by persons of ordinary skill in the art based on the embodiments of the present invention without creative efforts shall fall within the protection scope of the present invention.

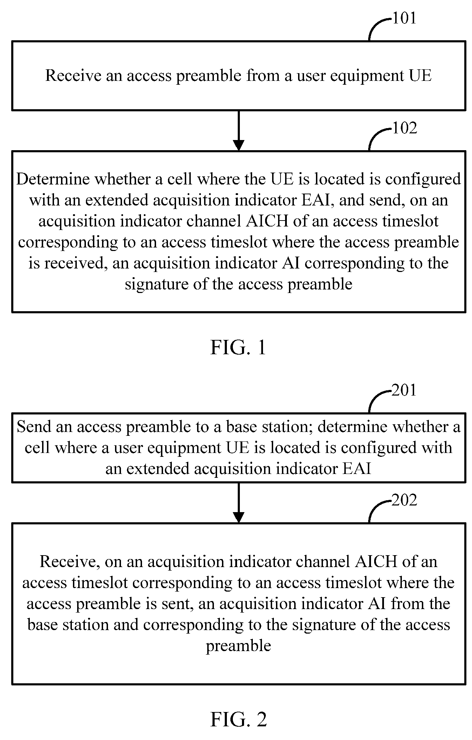

An embodiment of the present invention provides a method for indicating a transmission time interval. As shown in FIG. 1, the solution is applied to a base station side and includes:
101. receiving an access preamble from a user equipment UE, where the access preamble carries a signature (signature); and
102. determining whether a cell where the UE is located is configured with an extended acquisition indicator EAI, and sending, on an acquisition indicator channel AICH of an access timeslot corresponding to an access timeslot where the access preamble is received, an acquisition indicator AI corresponding to the signature of the access preamble; where
if a value of the AI is a first value, default resources associated with the signature of the access preamble which are used by the UE and a transmission time interval TTI type requested by the UE are allocated and indicated, or default resources associated with the AI corresponding to the signature of the access preamble which are used by the UE and a transmission time interval TTI type requested by the UE are allocated and indicated;
if the cell where the UE is located is configured with no EAI and the value of the AI is a second value, rejection of an access request of the UE is indicated, where the rejection of the access request of the UE may be implemented by sending a negative acknowledgement (NACK) to the UE; or
if the cell where the UE is located is configured with an EAI and the value of the AI is the second value, an EAI is sent to indicate rejection of the access request of the UE, or allocate and indicate a resource index used by the UE and a TTI type, or indicate the UE to execute a fallback operation.

The relationship between the access timeslot where the access preamble is received and the corresponding access timeslot is as follows: A fixed time relationship exists between the access timeslot where the UE sends the access preamble (namely, the access timeslot where the base station receives the access preamble) and the access timeslot where the UE receives the AICH carrying the corresponding AI (namely, the corresponding timeslot), that is, the two access timeslots have a corresponding relationship due to the fixed time relationship. After the UE sends an access preamble at an uplink access timeslot making reference to the UE itself, the UE receives an AI at the corresponding downlink access timeslot; correspondingly, the base station sends the AI at the corresponding downlink access timeslot after receiving the access preamble at the uplink access timeslot.

The signature carried in the AICH and the access preamble signature have a mapping relationship, where the mapping relationship is used to respond to the received access preamble through the AI corresponding to the signature; the UE receives, at the access timeslot corresponding to the access timeslot where the access preamble is sent, the AI corresponding to the preamble signature, so as to judge whether the base station has sent the corresponding AI.

It should be noted that the above "first value" and "second value" are used to distinguish two different values, and do not represent other meanings. Preferably, for better compatibility with the current standard, the first value is +1 and the second value is -1; if the value of the AI is the first value, allocating and indicating default resources associated with the signature of the access preamble which are used by the UE and a transmission time interval TTI type requested by the UE, or allocating and indicating default resources associated with the AI corresponding to the signature of the access preamble which are used by the UE and a transmission time interval TTI type requested by the UE, includes: when the value of the AI is +1, allocating and indicating default resources associated with the signature of the access preamble which are used by the UE and a transmission time interval TTI type requested by the UE, or allocating and indicating default resources associated with the AI corresponding to the signature of the access preamble which are used by the UE and a transmission time interval TTI type requested by the UE.

If the cell where the UE is located is configured with no EAI, and the value of the AI is the second value, indicating rejection of the access request of the UE, includes: if the value of the AI is -1, and the cell where the UE is located is configured with no EAI, indicating rejection of the access request of the UE.

If the cell where the UE is located is configured with an EAI and the value of the AI is the second value, sending an EAI to indicate rejection of the access request of the UE, or allocate and indicate a resource index used by the UE and a TTI type, or indicate the UE to execute a fallback operation, includes: if the value of the AI is -1, and the cell where the UE is located is configured with an EAI, sending an EAI to indicate rejection of the access request of the UE, or allocate and indicate a resource index used by the UE and a TTI type, or indicate the UE to execute a fallback operation.

With the solution of the embodiment of the present invention, by determining whether a cell is configured with an EAI, one AI or EAI is used to indicate whether the access request of the UE is rejected, and indicate the TTI type, indicate the resource index used by the UE, indicate the UE to execute a fallback operation, and indicate the UE to use default resources. Therefore, the problem that the judging condition of EAI configured is always YES (yes) is solved; the UE access delay may be reduced; the number of preambles sent by the UE may be reduced; and interference on the uplink may be reduced.

With respect to the implementation solutions of sending an EAI to indicate rejection of the access request of the UE, or allocate and indicate a resource index used by the UE and a TTI type, or indicate the UE to execute a fallback operation in step 102 of the above solution, the embodiment of the present invention provides three implementation examples. It should be noted that the following three solutions are preferred implementation solutions but not the exhaustive enumeration of implementation solutions and should not be understood as a limitation on the embodiment of the present invention. The specific solutions are as follows:
Solution 1
   sending one EAI, which is used to indicate rejection of the access request of the UE, or allocate and indicate a resource index used by the UE and mapped by the EAI and a TTI type requested by the UE;
   sending two EAIs, where one EAI is a rejection NACK, used to allocate and indicate a resource index used by the UE and mapped by another EAI, and another TTI type different from the TTI type requested by the UE, or a preset TTI type; or
   sending two EAIs, where the two EAIs do not include a NACK, or sending more than two EAIs used to indicate the UE to execute the fallback operation.
Solution 2
   sending one EAI, which is used to indicate rejection of the access request of the UE, or indicate the UE to execute the fallback operation, or allocate and indicate a resource index used by the UE and mapped by the EAI and a TTI type requested by the UE; or
   sending two EAIs, where one is a TTI type indicator, and the other is an EAI indicating the resource index used by the UE, where the two EAIs are respectively used to indicate the resource index used by the UE, and another TTI type different from the TTI type requested by the UE, or a preset TTI type.
Solution 3
   sending one EAI, which is used to indicate rejection of the access request of the UE, or indicate the UE to execute the fallback operation, or indicate a resource index used by the UE and indicated by the EAI and a TTI type requested by the UE; or
   sending two EAIs, where one is a TTI type or fallback indicator, and the other is an EAI indicating the resource index used by the UE, where the two EAIs are respectively used to allocate and indicate the resource index used by the UE, and another TTI type different from the TTI type requested by the UE, or a preset TTI type.

Corresponding to the implementation solution at the base station side, an embodiment of the present invention also provides another method for indicating a transmission time interval. As shown in FIG. 2, the solution is applied to a user equipment side and includes:
201. sending an access preamble to a base station, where the access preamble carries a signature; and determining whether a cell where a user equipment UE is located is configured with an extended acquisition indicator EAI; and
202. receiving, on an acquisition indicator channel AICH of an access timeslot corresponding to an access timeslot where the access preamble is sent, an acquisition indicator AI from the base station and corresponding to the signature of the access preamble; where
if a value of the AI is a first value, default resources associated with the signature of the access preamble which are used by the UE and a transmission time interval TTI type requested by the UE are indicated, or default resources associated with the AI corresponding to the signature of the access preamble which are used by the UE and a transmission time interval TTI type requested by the UE are allocated and indicated;
if the cell where the UE is located is configured with no EAI, and the value of the AI is a second value, rejection of the access request of the UE is indicated; or
if the cell where the UE is located is configured with an EAI and the value of the AI is the second value, an EAI is received, where the EAI indicates rejection of the access request of the UE, or indicates a resource index used by the UE and a TTI type, or instructs the UE to execute a fallback operation.

It should be noted that the above "first value" and "second value" are used to distinguish two different values, and do not represent other meanings. Preferably, for better compatibility with the current standard, the first value is +1 and the second value is -1; if the value of the AI is the first value, indicating default resources associated with the signature of the access preamble which are used by the UE and a transmission time interval TTI type requested by the UE, or allocating and indicating default resources associated with the AI corresponding to the signature of the access preamble which are used by the UE and a transmission time interval TTI type requested by the UE, includes: when the value of the AI is +1, indicating default resources associated with the signature of the access preamble which are used by the UE and a transmission time interval TTI type requested by the UE, or allocating and indicating default resources associated with the AI corresponding to the signature of the access preamble which are used by the UE and a transmission time interval TTI type requested by the UE.

If the cell where the UE is located is configured with no EAI, and the value of the AI is the second value, indicating rejection of the access request of the UE, includes: if the value of the AI is -1, and the cell where the UE is located is configured with no EAI, indicating rejection of the access request of the UE.

If the value of the AI is -1, and the cell where the UE is located is configured with an EAI, receiving an EAI which indicates rejection of the access request of the UE, or allocate and indicate a resource index used by the UE and a TTI type, or indicate the UE to execute a fallback operation, if the cell where the UE is located is configured with an EAI and the value of the AI is the second value, includes: receiving an EAI which indicates rejection of the access request of the UE, or allocate and indicate a resource index used by the UE and a TTI type, or indicate the UE to execute a fallback operation.

With respect to the implementation solutions of receiving an EAI which indicates rejection of the access request of the UE, or allocates and indicates a resource index used by the UE and a TTI type, or instructs the UE to execute a fallback operation in step 202 of the above solution, the embodiment of the present invention provides three implementation examples. It should be noted that the following three solutions are preferred implementation solutions but not the exhaustive enumeration of implementation solutions and should not be understood as a limitation on the embodiment of the present invention. The specific solutions are as follows:
Solution 1
   if one EAI is received, the EAI is used to indicate rejection of the access request of the UE, or indicate a resource index used by the UE and mapped by the EAI and the TTI type requested by the UE;
   if two EAIs are received and one EAI is a rejection NACK, indicating a resource index used by the UE and mapped by another EAI, and another TTI type different from the TTI type requested by the UE, or a preset TTI type; or
   if two EAIs are received and the two EAIs do not include a NACK, or more than two EAIs are received, instructing the UE to execute the fallback operation.
Solution 2
   if one EAI is received, the EAI is used to indicate rejection of the access request of the UE, or indicate the UE to execute the fallback operation, or indicate a resource index used by the UE and mapped by the EAI and the TTI type requested by the UE; or
   if two EAIs are received and one is a TTI type indicator, and the other is an EAI indicating the resource index used by the UE, the two EAIs are respectively used to indicate the resource index used by the UE, and another TTI type different from the TTI type requested by the UE, or a preset TTI type.
Solution 3
   if one EAI is received, the EAI is used to indicate rejection of the access request of the UE, or indicate the UE to execute the fallback operation, or indicate a resource index used by the UE and indicated by the EAI and the TTI type requested by the UE; or
   if two EAIs are received, where one is a TTI type or fallback indicator, and the other is an EAI indicating the resource index used by the UE, the two EAIs are respectively used to indicate the resource index used by the UE, and another TTI type different from the TTI type requested by the UE, or a preset TTI type.

The three implementation solutions implemented on the base station side correspond to those on the user equipment side in sequence. The subsequent embodiments describe the sequence of executing the three solutions in more detail. In the description process, the judgment on the UE side is used as an example, and the setting on the base station side corresponds to that on the UE side and is not further described herein. In the following three embodiments, the specific implementation solutions in the above embodiment are described through examples: sending an EAI to indicate the UE to execute a fallback operation includes: defining an EAI to indicate the UE to execute a fallback operation. Sending two EAIs, where one is a TTI type indicator, includes: defining an EAI to indicate another TTI type different from the requested TTI type and used by the UE, or a fixed TTI type. Sending two EAIs, where one is a TTI type or fallback indicator, includes: defining an EAI to indicate the UE to use a TTI type or execute a fallback.

The execution sequence of solution 1: The solution may use the resource configuration mapping shown in Table 1, where the table is as follows:

**Table 1 Mapping between EAIs and resource configuration**

| **EAIs'** | **Signature s'** | **E-DCH Resource Configuration Index (Configuration Index Number)** |
|---|---|---|
| +1 | 0 | NACK |
| -1 | | (X + 1) mod Y |
| +1 | 1 | (X + 2) mod Y |
| -1 | | (X + 3) mod Y |
| +1 | 2 | (X + 4) mod Y |
| -1 | | (X + 5) mod Y |
| +1 | 3 | (X + 6) mod Y |
| -1 | | (X + 7) mod Y |
| +1 | 4 | (X + 8) mod Y |
| -1 | | (X + 9) mod Y |
| +1 | 5 | (X + 10) mod Y |
| -1 | | (X + 11) mod Y |
| +1 | 6 | (X + 12) mod Y |
| -1 | | (X + 13) mod Y |
| +1 | 7 | (X + 14) mod Y |
| -1 | | (X + 15) mod Y |
| +1 | 8 | (X + 16) mod Y |
| -1 | | (X + 17) mod Y |
| +1 | 9 | (X + 18) mod Y |
| -1 | | (X + 19) mod Y |
| +1 | 10 | (X + 20) mod Y |
| -1 | | (X + 21) mod Y |
| +1 | 11 | (X + 22) mod Y |
| -1 | | (X + 23) mod Y |
| +1 | 12 | (X + 24) mod Y |
| -1 | | (X + 25) mod Y |
| +1 | 13 | (X + 26) mod Y |
| -1 | | (X + 27) mod Y |
| +1 | 14 | (X + 28) mod Y |
| -1 | | (X + 29) mod Y |
| +1 | 15 | (X + 30) mod Y |
| -1 | | (X + 31) mod Y |

In the above Table 1, the number of signatures in the EAI part is 16, the combination of values (+1 or -1) of different EAIs' of each signature s' may include 32 EAI signatures. At a given access timeslot, the base station can indicate at most one of the 32 EAI signatures, that is, carry at most one signature with the EAI not being 0. In the 32 EAI signatures, when s' = 0 and when EAI0 = +1, the EAI signature indicates a NACK, and the remaining signatures may indicate the index of uplink E-DCH resources. The index is obtained according to the default resource index associated with the signature of the access preamble to which the base station responds through the AI plus an offset, and the combination of different signatures carried by the EAI part and EAIs indicates different resource index offsets. After the UE receives the EAI, the UE may calculate, through the indicated offset, the resource index indicated by the base station. The resource indicator relationship is shown in Table 1, where X indicates the default resource index associated with the signature of the access preamble to which the base station responds through the AI, and Y indicates the total number of common E-DCH resources in the cell.

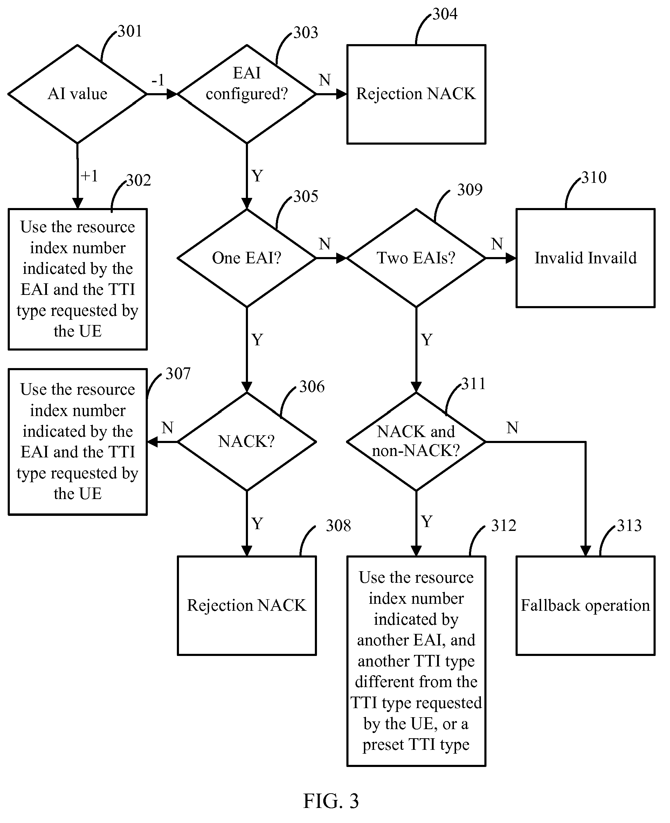

As shown in FIG. 3, the execution sequence includes:
301. obtaining an AI value from an AICH; and if the value is +1, going to 302; or if the value is -1, going to 303;
302. using the resource index indicated by the EAI and the TTI type requested by the UE;
303. determining whether an EAI is configured; and if so (Y), going to 305, or if not (N), going to 304;
304. indicating rejection (NACK) of the access request of the UE;
305. judging whether there is only one EAI, and if so, going to 306, or if not, going to 309;
306. determining whether the EAI is a NACK; and if so, going to 308, or if not, going to 307;
307. indicating the resource index used by the UE and indicated by the EAI and the TTI type requested by the UE;
308. indicating rejection (NACK) of the access request of the UE;
309. determining whether there are two EAIs, and if not, going to 310, or if so, going to 311;
310. indicating to the UE that resources are invalid;
311. if there are two EAIs, determining whether there are NACK and non-NACK EAIs, and if so, going to 312, or if not, going to 313;
312. indicating the resource index used by the UE and indicated by another EAI, and another TTI type different from the TTI type requested by the UE, or a preset TTI type; and
313. if there are two EAIs, and the two EAIs do not include a NACK, or there are more than two EAIs, instructing the UE to execute a fallback operation.

The difference between solution 2 and solution 1 lies in that: Among 32 EAIs in solution 2, one EAI is defined for indicating the TTI type, and one EAI is defined for indicating a fallback, and at most two EAIs may be sent. Specifically as shown in Table 2, X indicates the default resource index associated with the signature of the access preamble to which the base station responds through the AI, and Y indicates the total number of common E-DCH resources in the cell:

**Table 2**

| **EAIs**' | **Signature s'** | **E-DCH Resource Configuration Index** |
|---|---|---|
| +1 | 0 | NACK |
| -1 | | Fallback indicator |
| +1 | 1 | TTI indicator |
| -1 | | (X + 1) mod Y |
| +1 | 2 | (X + 2) mod Y |
| -1 | | (X + 3) mod Y |
| +1 | 3 | (X + 4) mod Y |
| -1 | | (X + 5) mod Y |
| +1 | 4 | (X + 6) mod Y |
| -1 | | (X + 7) mod Y |
| +1 | 5 | (X + 8) mod Y |
| -1 | | (X + 9) mod Y |
| +1 | 6 | (X + 10) mod Y |
| -1 | | (X + 11) mod Y |
| +1 | 7 | (X + 12) mod Y |
| -1 | | (X + 13) mod Y |
| +1 | 8 | (X + 14) mod Y |
| -1 | | (X + 15) mod Y |
| +1 | 9 | (X + 16) mod Y |
| -1 | | (X + 17) mod Y |
| +1 | 10 | (X + 18) mod Y |
| -1 | | (X + 19) mod Y |
| +1 | 11 | (X + 20) mod Y |
| -1 | | (X + 21) mod Y |
| +1 | 12 | (X + 22) mod Y |
| -1 | | (X + 23) mod Y |
| +1 | 13 | (X + 24) mod Y |
| -1 | | (X + 25) mod Y |
| +1 | 14 | (X + 26) mod Y |
| -1 | | (X + 27) mod Y |
| +1 | 15 | (X + 28) mod Y |
| -1 | | (X + 29) mod Y |

The difference between solution 3 and solution 1 lies in that: Among 32 EAIs in solution 3, only one EAI is defined for indicating the TTI type or fallback, and at most two EAIs may be sent. As shown in Table 3, X indicates the default resource index associated with the signature of the access preamble to which the base station responds through the AI, and Y indicates the total number of common E-DCH resources in the cell.

**Table 3**

| **EAIs**' | **Signature s'** | **E-DCH Resource Configuration Index** |
|---|---|---|
| +1 | 0 | NACK |
| -1 | | Fallback or TTI indicator |
| +1 | 1 | (X + 1) mod Y |
| -1 | | (X + 2) mod Y |
| +1 | 2 | (X + 3) mod Y |
| -1 | | (X + 4) mod Y |
| +1 | 3 | (X + 5) mod Y |
| -1 | | (X + 6) mod Y |
| +1 | 4 | (X + 7) mod Y |
| -1 | | (X + 8) mod Y |
| +1 | 5 | (X + 9) mod Y |
| -1 | | (X + 10) mod Y |
| +1 | 6 | (X + 11) mod Y |
| -1 | | (X + 12) mod Y |
| +1 | 7 | (X + 13) mod Y |
| -1 | | (X + 14) mod Y |
| +1 | 8 | (X + 15) mod Y |
| -1 | | (X + 16) mod Y |
| +1 | 9 | (X + 17) mod Y |
| -1 | | (X + 18) mod Y |
| +1 | 10 | (X + 19) mod Y |
| -1 | | (X + 20) mod Y |
| +1 | 11 | (X + 21) mod Y |
| -1 | | (X + 22) mod Y |
| +1 | 12 | (X + 23) mod Y |
| -1 | | (X + 24) mod Y |
| +1 | 13 | (X + 25) mod Y |
| -1 | | (X + 26) mod Y |
| +1 | 14 | (X + 27) mod Y |
| -1 | | (X + 28) mod Y |
| +1 | 15 | (X + 29) mod Y |
| -1 | | (X + 30) mod Y |

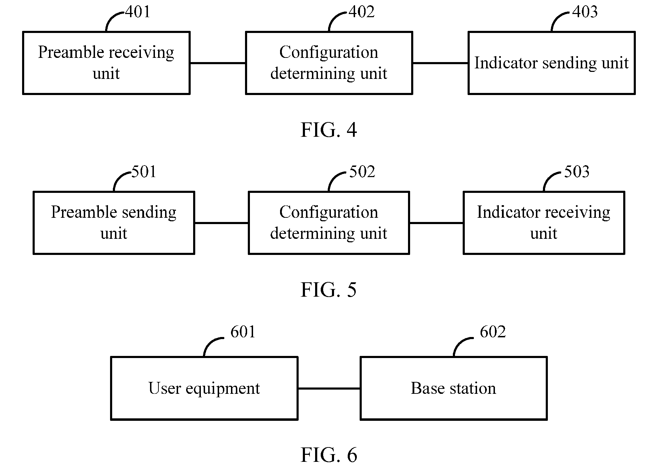

An embodiment of the present invention also provides a base station, as shown in FIG. 4, including:
a preamble receiving unit 401, configured to receive an access preamble from a user equipment UE, where the access preamble carries a signature;
a configuration determining unit 402, configured to determine whether a cell where the UE is located is configured with an extended acquisition indicator EAI; and
an indicator sending unit 403, configured to send, on an acquisition indicator channel AICH of an access timeslot corresponding to an access timeslot where the access preamble is received, an acquisition indicator AI corresponding to the signature of the access preamble; where
if a value of the AI is a first value, default resources associated with the signature of the access preamble which are used by the UE and a transmission time interval TTI type requested by the UE are allocated and indicated, or default resources associated with the AI corresponding to the signature of the access preamble which are used by the UE and a transmission time interval TTI type requested by the UE are allocated and indicated;
if the cell where the UE is located is configured with no EAI, and the value of the AI is a second value, rejection of the access request of the UE is indicated; or
if the cell where the UE is located is configured with an EAI and the value of the AI is the second value, an EAI is sent to indicate rejection of the access request of the UE, or allocate and indicate a resource index used by the UE and a TTI type, or indicate the UE to execute a fallback operation.

With the solution of the embodiment of the present invention, by determining whether a cell is configured with an EAI, one AI or EAI is used to indicate whether the access request of the UE is rejected, and indicate the TTI type, indicate the resource index used by the UE, indicate the UE to execute a fallback operation, and indicate the UE to use default resources. Therefore, the problem that the judging condition of EAI configured is always YES (yes) is solved; the UE access delay may be reduced; the number of preambles sent by the UE may be reduced; and interference on the uplink may be reduced.

Optionally, the indicator sending unit 403 being configured to send an EAI to indicate rejection of the access request of the UE, or allocate and indicate a resource index used by the UE and a TTI type, or indicate the UE to execute a fallback operation, includes:
sending one EAI, which is used to indicate rejection of the access request of the UE, or allocate and indicate a resource index used by the UE and mapped by the EAI and the TTI type requested by the UE;
sending two EAIs, where one EAI is a rejection NACK, used to allocate and indicate a resource index used by the UE and mapped by another EAI, and another TTI type different from the TTI type requested by the UE, or a preset TTI type; or
sending two EAIs, where the two EAIs do not include a NACK, or sending more than two EAIs used to indicate the UE to execute the fallback operation.

Optionally, the indicator sending unit 403 being configured to send an EAI to indicate rejection of the access request of the UE, or allocate and indicate a resource index used by the UE and a TTI type, or indicate the UE to execute a fallback operation, includes:
sending one EAI, which is used to indicate rejection of the access request of the UE, or indicate the UE to execute the fallback operation, or allocate and indicate a resource index used by the UE and mapped by the EAI and the TTI type requested by the UE; or
sending two EAIs, where one is a TTI type indicator, and the other is an EAI indicating the resource index used by the UE, where the two EAIs are respectively used to indicate the resource index used by the UE, and another TTI type different from the TTI type requested by the UE, or a preset TTI type.

Optionally, the indicator sending unit 403 being configured to send an EAI to indicate rejection of the access request of the UE, or allocate and indicate a resource index used by the UE and a TTI type, or indicate the UE to execute a fallback operation, includes:
sending one EAI, which is used to indicate rejection of the access request of the UE, or indicate the UE to execute the fallback operation, or indicate a resource index used by the UE and indicated by the EAI and the TTI type requested by the UE; or
sending two EAIs, where one is a TTI type or fallback indicator, and the other is an EAI indicating the resource index used by the UE, where the two EAIs are respectively used to allocate and indicate the resource index used by the UE, and another TTI type different from the TTI type requested by the UE, or a preset TTI type.

An embodiment of the present invention also provides a user equipment, as shown in FIG. 5, including:
a preamble sending unit 501, configured to send an access preamble to a base station, where the access preamble carries a signature;
a configuration determining unit 502, configured to determine whether a cell where the user equipment UE is located is configured with an extended acquisition indicator EAI; and
an indicator receiving unit 503, configured to receive, on an acquisition indicator channel AICH of an access timeslot corresponding to an access timeslot where the access preamble is sent, an acquisition indicator AI from the base station and corresponding to the signature of the access preamble; where
if a value of the AI is a first value, default resources associated with the signature of the access preamble which are used by the UE and a transmission time interval TTI type requested by the UE are indicated, or default resources associated with the AI corresponding to the signature of the access preamble which are used by the UE and a transmission time interval TTI type requested by the UE are allocated and indicated;
if the cell where the UE is located is configured with no EAI, and the value of the AI is a second value, rejection of the access request of the UE is indicated; or
if the cell where the UE is located is configured with an EAI and the value of the AI is the second value, an EAI which indicates rejection of the access request of the UE, or indicates a resource index used by the UE and a TTI type, or instructs the UE to execute a fallback operation is received.

It should be noted that the indicator receiving unit 503 being configured to receive an EAI which indicates rejection of the access request of the UE, or indicates a resource index used by the UE and a TTI type, or instructs the UE to execute a fallback operation, may be specifically implemented in three optional modes:
Solution 1
   if one EAI is received, the EAI is used to indicate rejection of the access request of the UE, or indicate a resource index used by the UE and mapped by the EAI and the TTI type requested by the UE;
   if two EAIs are received and one EAI is a rejection NACK, indicating a resource index used by the UE and mapped by another EAI, and another TTI type different from the TTI type requested by the UE, or a preset TTI type; or
   if two EAIs are received and the two EAIs do not include a NACK, or more than two EAIs are received, instructing the UE to execute the fallback operation.
Solution 2
   if one EAI is received, the EAI is used to indicate rejection of the access request of the UE, or indicate the UE to execute the fallback operation, or indicate a resource index used by the UE and mapped by the EAI and the TTI type requested by the UE; or
   if two EAIs are received and one is a TTI type indicator, and the other is an EAI indicating the resource index used by the UE, the two EAIs are respectively used to indicate the resource index used by the UE, and another TTI type different from the TTI type requested by the UE, or a preset TTI type.
Solution 3
   if one EAI is received, the EAI is used to indicate rejection of the access request of the UE, or indicate the UE to execute the fallback operation, or indicate a resource index used by the UE and indicated by the EAI and the TTI type requested by the UE; or
   if two EAIs are received, where one is a TTI type or fallback indicator, and the other is an EAI indicating the resource index used by the UE, the two EAIs are respectively used to indicate the resource index used by the UE, and another TTI type different from the TTI type requested by the UE, or a preset TTI type.

With the solution of the embodiment of the present invention, by determining whether a cell is configured with an EAI, one AI or EAI is used to indicate whether the access request of the UE is rejected, and indicate the TTI type, indicate the resource index used by the UE, indicate the UE to execute a fallback operation, and indicate the UE to use default resources. Therefore, the problem that the judging condition of EAI configured is always YES (yes) is solved; the UE access delay may be reduced; the number of preambles sent by the UE may be reduced; and interference on the uplink may be reduced.

An embodiment of the present invention also provides a system for indicating a transmission time interval. As shown in FIG. 6, the system includes:
a user equipment 601, configured to send an access preamble to a base station 602, where the access preamble carries a signature; determine whether a cell where the user equipment UE 601 is located is configured with an extended acquisition indicator EAI; receive, on an acquisition indicator channel AICH of an access timeslot corresponding to an access timeslot where the access preamble is sent, an acquisition indicator AI from the base station 602 and corresponding to the signature of the access preamble; and receive the EAI; and
the base station 602, configured to: receive the access preamble from the user equipment UE 601;
determine whether the cell where the UE is located is configured with an extended acquisition indicator EAI, and send, at the acquisition indicator channel AICH of the access timeslot corresponding to the access timeslot where the access preamble is received, an acquisition indicator AI corresponding to the signature of the access preamble, where: if a value of the AI is a first value, default resources associated with the signature of the access preamble which are used by the UE and a transmission time interval TTI type requested by the UE are allocated and indicated, or default resources associated with the AI corresponding to the signature of the access preamble which are used by the UE and a transmission time interval TTI type requested by the UE are allocated and indicated; if the cell where the UE is located is configured with no EAI, and the value of the AI is a second value, rejection of the access request of the UE is indicated; or if the cell where the UE is located is configured with an EAI and the value of the AI is a second value, an EAI is sent to indicate rejection of the access request of the UE, or allocate and indicate a resource index used by the UE and a TTI type, or indicate the UE to execute a fallback operation.

Optionally, the specific optional implementation solution for the base station 602 sending an EAI to indicate rejection of the access request of the UE, or allocate and indicate a resource index used by the UE and a TTI type, or indicate the UE to execute a fallback operation may be:
Solution 1
   sending one EAI, which is used to indicate rejection of the access request of the UE, or allocate and indicate a resource index used by the UE and mapped by the EAI and the TTI type requested by the UE;
   sending two EAIs, where one EAI is a rejection NACK, used to allocate and indicate a resource index used by the UE and mapped by another EAI, and another TTI type different from the TTI type requested by the UE, or a preset TTI type; or
   sending two EAIs, where the two EAIs do not include a NACK, or sending more than two EAIs used to indicate the UE to execute the fallback operation.
Solution 2
   sending one EAI, which is used to indicate rejection of the access request of the UE, or indicate the UE to execute the fallback operation, or allocate and indicate a resource index used by the UE and mapped by the EAI and the TTI type requested by the UE; or
   sending two EAIs, where one is a TTI type indicator, and the other is an EAI indicating the resource index used by the UE, where the two EAIs are respectively used to indicate the resource index used by the UE, and another TTI type different from the TTI type requested by the UE, or a preset TTI type.
Solution 3
   sending one EAI, which is used to indicate rejection of the access request of the UE, or indicate the UE to execute the fallback operation, or indicate a resource index used by the UE and indicated by the EAI and the TTI type requested by the UE; or
   sending two EAIs, where one is a TTI type or fallback indicator, and the other is an EAI indicating the resource index used by the UE, where the two EAIs are respectively used to allocate and indicate the resource index used by the UE, and another TTI type different from the TTI type requested by the UE, or a preset TTI type.

With the solution of the embodiment of the present invention, by determining whether a cell is configured with an EAI, one AI or EAI is used to indicate whether the access request of the UE is rejected, and indicate the TTI type, indicate the resource index used by the UE, indicate the UE to execute a fallback operation, and indicate the UE to use default resources. Therefore, the problem that the judging condition of EAI configured is always YES (yes) is solved; the UE access delay may be reduced; the number of preambles sent by the UE may be reduced; and interference on the uplink may be reduced.

It should be noted that the units described in the above UE and base station embodiments are divided only according to the function logic but are not limited to such division. Units that can implement corresponding functions are also applicable. In addition, names of the functional units are for differentiation only and therefore are not intended to limit the protection scope of the present invention.

In addition, persons of ordinary skill in the art may understand that all or part of the steps of the foregoing method embodiments can be implemented by hardware following instructions of programs. The programs may be stored in a computer readable storage medium. The storage medium may be a read only memory, a magnetic disk, or an optical disk.

The foregoing descriptions are merely exemplary specific embodiments of the present invention, but are not intended to limit the protection scope of the present invention. Any variation or replacement figured out by persons skilled in the art within the technical scope disclosed in the embodiments of the present invention shall fall within the protection scope of the present invention. Therefore, the protection scope of the present invention shall be subject to the protection scope of the claims.

## Claims

1. A method for indicating a transmission time interval, comprising:
receiving (101) an access preamble from a user equipment, UE, wherein the access preamble carries a signature; and
determining (102)whether a cell where the UE is located is configured with an extended acquisition indicator, EAI, and sending, on an acquisition indicator channel, AICH, of an access timeslot corresponding to an access timeslot where the access preamble is received, an acquisition indicator, AI, corresponding to the signature of the access preamble; wherein
if a value of the AI is a first value, default resources associated with the signature of the access preamble which are used by the UE and a transmission time interval, TTI, type requested by the UE are allocated and indicated, or default resources associated with the AI corresponding to the signature of the access preamble which are used by the UE and a TTI type requested by the UE are allocated and indicated, wherein the method further comprises: if the cell where the UE is located is configured with an EAI and the value of the AI is a second value being different from the first value, sending an EAI to the UE to indicate rejection of the access request of the UE, or allocate and indicate a resource index used by the UE and a TTI type, or indicate the UE to execute a fallback operation, **characterized in:**
**that** the sending an EAI to the UE to indicate rejection of the access request of the UE, or allocate and indicate a resource index used by the UE and a TTI type, or indicate the UE to execute a fallback operation comprises:
sending two EAIs to the UE, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

2. The method according to claim 1, wherein the method further comprises: if the cell where the UE is located is configured with no EAI and the value of the AI is a second value, being different from the first value, rejection of an access request of the UE is indicated.

3. The method according to claim 1, wherein the method further comprises: if the cell where the UE is located is configured with an EAI and the value of the AI is the second value, being different from the first value, sending an EAI to the UE to indicate rejection of the access request of the UE, or allocate and indicate a resource index used by the UE and a TTI type, or indicate the UE to execute a fallback operation,
wherein the sending an EAI to the UE to indicate rejection of the access request of the UE, or allocate and indicate a resource index used by the UE and a TTI type, or indicate the UE to execute a fallback operation comprises:
sending one EAI to the UE, wherein if the EAI is NACK, the EAI is used to indicate rejection of the access request of the UE, if the EAI is not NACK, the EAI is used to indicate a resource index used by the UE and mapped by the EAI and the TTI type requested by the UE.

4. A method for indicating a transmission time interval, comprising:
sending an access preamble to a base station (201), wherein the access preamble carries a signature; and determining whether a cell where a user equipment, UE, is located is configured with an extended acquisition indicator, EAI; and
receiving (202), on an acquisition indicator channel, AICH, of an access timeslot corresponding to an access timeslot where the access preamble is sent, an acquisition indicator, AI, from the base station and corresponding to the signature of the access preamble; wherein
if a value of the AI is a first value, default resources associated with the signature of the access preamble which are used by the UE and a transmission time interval, TTI, type requested by the UE are indicated, or default resources associated with the AI corresponding to the signature of the access preamble which are used by the UE and a TTI type requested by the UE are allocated and indicated, wherein the method further comprises: if the cell where the UE is located is configured with an EAI and the value of the AI is a second value being different from the first value, receiving an EAI which indicates rejection of the access request of the UE, or indicates a resource index used by the UE and a TTI type, or instructs the UE to execute a fallback operation, **characterized in:**
**that** the receiving an EAI which indicates rejection of the access request of the UE, or indicates a resource index used by the UE and a TTI type, or instructs the UE to execute a fallback operation comprises:
receiving two EAIs, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

5. The method according to claim 4, wherein the method further comprises: if the cell where the UE is located is configured with no EAI and the value of the AI is a second value, being different from the first value, rejection of an access request of the UE is indicated.

6. The method according to claim 4 or 5, wherein the method further comprises: if the cell where the UE is located is configured with an EAI and the value of the AI is the second value, being different from the first value, receiving an EAI which indicates rejection of the access request of the UE, or indicates a resource index used by the UE and a TTI type, or instructs the UE to execute a fallback operation,
where the receiving an EAI which indicates rejection of the access request of the UE, or indicates a resource index used by the UE and a TTI type, or instructs the UE to execute a fallback operation comprises:
receiving one EAI , wherein if the EAI is NACK, the EAI is used to indicate rejection of the access request of the UE, if the EAI is not NACK, the EAI is used to indicate a resource index used by the UE and mapped by the EAI and the TTI type requested by the UE.

7. A base station, comprising:
a preamble receiving unit (401), configured to receive an access preamble from a user equipment, UE, wherein the access preamble carries a signature;
a configuration determining unit (402), configured to determine whether a cell where the UE is located is configured with an extended acquisition indicator, EAI; and
an indicator sending unit (403), configured to send, on an acquisition indicator channel, AICH, of an access timeslot corresponding to an access timeslot where the access preamble is received, an acquisition indicator, AI, corresponding to the signature of the access preamble; wherein
if a value of the AI is a first value, default resources associated with the signature of the access preamble which are used by the UE and a transmission time interval, TTI, type requested by the UE are allocated and indicated, or default resources associated with the AI corresponding to the signature of the access preamble which are used by the UE and a TTI type requested by the UE are allocated and indicated, wherein:
if the cell where the UE is located is configured with an EAI and the value of the AI is a second value being different from the first value, **characterized in:**
**that** the indicator sending unit is configured to send an EAI to the UE to indicate rejection of the access request of the UE, or allocate and indicate a resource index used by the UE and a TTI type, or indicate the UE to execute a fallback operation, wherein:
the indicator sending unit is configured to send two EAIs, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

8. The base station according to claim 7, wherein if the cell where the UE is located is configured with no EAI and the value of the AI is a second value, being different from the first value, rejection of an access request of the UE is indicated.

9. The base station according to claim 7 or 8, wherein:
if the cell where the UE is located is configured with an EAI and the value of the AI is the second value, being different from the first value, the indicator sending unit is configured to send an EAI to the UE to indicate rejection of the access request of the UE, or allocate and indicate a resource index used by the UE and a TTI type, or indicate the UE to execute a fallback operation, wherein:
the indicator sending unit is configured to send one EAI, wherein if the EAI is NACK, the EAI is used to indicate rejection of the access request of the UE, or if the EAI is not NACK, the EAI is used to indicate a resource index used by the UE and mapped by the EAI and the TTI type requested by the UE.

10. A user equipment, **characterized by** comprising:
a preamble sending unit (501), configured to send an access preamble to a base station, wherein the access preamble carries a signature;
a configuration determining unit (502), configured to determine whether a cell where the user equipment, UE, is located is configured with an extended acquisition indicator, EAI; and
an indicator receiving unit (503), configured to receive, on an acquisition indicator channel, AICH, of an access timeslot corresponding to an access timeslot where the access preamble is sent, an acquisition indicator, AI, from the base station and corresponding to the signature of the access preamble; wherein
if a value of the AI is a first value, default resources associated with the signature of the access preamble which are used by the UE and a transmission time interval, TTI, type requested by the UE are indicated, or default resources associated with the AI corresponding to the signature of the access preamble which are used by the UE and a TTI type requested by the UE are allocated and indicated, wherein if the cell where the UE is located is configured with an EAI and the value of the AI is a second value being different from the first value, the indicator receiving unit is configured to receive an EAI which indicates rejection of the access request of the UE, or indicates a resource index used by the UE and a TTI type, or instructs the UE to execute a fallback operation, wherein:
the indicator receiving unit is configured to receive one EAI, wherein if the EAI is NACK, the EAI is used to indicate rejection of the access request of the UE, or if the EAI is not NACK, the EAI is used to indicate a resource index used by the UE and mapped by the EAI and the TTI type requested by the UE; and
the indicator receiving unit is configured to receive two EAIs, wherein if the two EAIs comprises a NACK EAI and a non-NACK EAI, the non-NACK EAI is used to indicate the resource index used by the UE, and another TTI type different from the TTI type requested by the UE, or a preset TTI type, if the two EAIs do not comprise a NACK EAI, the two EAIs are used to instruct the UE to execute a fallback operation.

11. The user equipment according to claim 10, wherein if the cell where the UE is located is configured with no EAI and the value of the AI is a second value, being different from the first value, rejection of an access request of the UE is indicated.

## Patentansprüche

1. Verfahren zum Angeben eines Übertragungszeitintervalls, umfassend:
Empfangen (101) einer Zugangspräambel von einem Benutzergerät UE, wobei die Zugangspräambel eine Signatur trägt; und
Bestimmen (102), ob eine Zelle, in der sich das UE befindet, mit einem erweiterten Akquisitionsindikator EAI konfiguriert ist, und Senden eines Akquisitionsindikators AI, der der Signatur der Zugangspräambel entspricht, auf einem Akquisitionsindikatorkanal AICH eines Zugangszeitschlitzes, der einem Zugangszeitschlitz entspricht, in dem die Zugangspräambel empfangen wird; wobei wenn ein Wert des AI ein erster Wert ist, Vorgaberessourcen, die mit der Signatur der Zugangspräambel assoziiert sind, die von dem UE verwendet werden, und ein Typ des Übertragungszeitintervalls TTI, der durch das UE angefordert wird, zugeteilt und angegeben werden oder Vorgaberessourcen, die mit dem AI assoziiert sind, der der Signatur der Zugangspräambel entspricht, die von dem UE verwendet werden, und ein durch das UE angeforderter TTI-Typ zugeteilt und angegeben werden, wobei das Verfahren ferner Folgendes umfasst: wenn die Zelle, in der sich das UE befindet, mit einem EAI konfiguriert ist und der Wert des AI ein zweiter Wert ist, der von dem ersten Wert verschieden ist, ein EAI zu de UE gesendet wird, um Zurückweisung der Zugangsanforderung des UE anzugeben oder einen von dem UE verwendeten Ressourcenindex und einen TTI-Typ zuzuteilen und anzugeben oder dem UE anzugeben, eine "Fallback"-Operation auszuführen,
**dadurch gekennzeichnet, dass** das Senden eines EAI zu dem UE, um Zurückweisung der Zugangsanforderung des UE anzugeben oder einen von dem UE verwendeten Ressourcenindex und einen TTI-Typ zuzuteilen und anzugeben oder dem UE anzugeben, eine "Fallback"-Operation auszuführen, Folgendes umfasst:
Senden von zwei EAI zu dem UE, wobei, wenn die zwei EAI ein NACK-EAI und ein Nicht-NACK-EAI umfassen, der Nicht-NACK-EAI verwendet wird, um den von dem UE verwendeten Ressourcenindex und einen von dem durch das UE angeforderten TTI-Typ verschiedenen anderen TTI-Typ oder einen voreingestellten TTI-Typ anzugeben, und wenn die zwei EAI nicht ein NACK-EAI umfassen, die zwei EAI verwendet werden, um das UE anzuweisen, eine "Fallback"-Operation auszuführen.

2. Verfahren nach Anspruch 1, wobei das Verfahren ferner Folgendes umfasst: wenn die Zelle, in der sich das UE befindet, mit keinem EAI konfiguriert ist und der Wert des AI ein zweiter Wert ist, der von dem ersten Wert verschieden ist, Zurückweisung einer Zugangsanforderung des UE angegeben wird.

3. Verfahren nach Anspruch 1 oder 2, wobei das Verfahren ferner Folgendes umfasst:
wenn die Zelle, in der sich das UE befindet, mit einem EAI konfiguriert ist und der Wert des AI der zweite Wert ist, der von dem ersten Wert verschieden ist,
Senden eines EAI zu dem UE, um Zurückweisung der Zugangsanforderung des UE anzugeben oder einen von dem UE verwendeten Ressourcenindex und einen TTI-Typ zuzuteilen und anzugeben oder dem UE anzugeben, eine "Fallback"-Operation auszuführen,
wobei das Senden eines EAI zu dem UE, um Zurückweisung der Zugangsanforderung des UE anzugeben oder einen von dem UE verwendeten Ressourcenindex und einen TTI-Typ zuzuteilen und anzugeben oder dem UE anzugeben, eine "Fallback"-Operation auszuführen, Folgendes umfasst:
Senden eines EAI zu dem UE, wobei, wenn der EAI NACK ist, der EAI verwendet wird, um Zurückweisung der Zugangsanforderung des UE anzugeben, wenn der EAI nicht NACK ist, der EAI verwendet wird, um einen von dem UE verwendeten und durch den EAI abgebildeten Ressourcenindex und den durch das UE angeforderten TTI-Typ anzugeben.

4. Verfahren zum Angeben eines Übertragungszeitintervalls, umfassend:
Senden einer Zugangspräambel zu einer Basisstation (201), wobei die Zugangspräambel eine Signatur trägt; und Bestimmen, ob eine Zelle, in der sich ein Benutzergerät UE befindet, mit einem erweiterten Akquisitionsindikator EAI konfiguriert ist; und
Empfangen (202) eines Akquisitionsindikators AI von der Basisstation und entsprechend der Signatur der Zugangspräambel auf einem Akquisitionsindikatorkanal AICH eines Zugangszeitschlitzes, der einem Zugangszeitschlitz entspricht, in dem die Zugangspräambel gesendet wird; wobei
wenn ein Wert des AI ein erster Wert ist, Vorgaberessourcen, die mit der Signatur der Zugangspräambel assoziiert sind, die von dem UE verwendet werden, und ein durch das UE angeforderter Typ des Übertragungszeitintervalls TTI angegeben werden oder Vorgaberessourcen, die mit dem AI assoziiert sind, der der Signatur der Zugangspräambel entspricht, die von dem UE verwendet werden und ein durch das UE angeforderter TTI-Typ zugeteilt und angegeben werden, wobei das Verfahren ferner Folgendes umfasst: wenn die Zelle, in der sich das UE befindet, mit einem EAI konfiguriert ist und der Wert des AI ein zweiter Wert ist, der von dem ersten Wert verschieden ist, Empfangen eines EAI, der Zurückweisung der Zugangsanforderung des UE angibt oder einen von dem UE verwendeten Ressourcenindex und einen TTI-Typ angibt oder das UE anweist, eine "Fallback"-Operation auszuführen, **dadurch gekennzeichnet, dass**
das Empfangen eines EAI, der Zurückweisung der Zugangsanforderung des UE angibt oder einen von dem UE verwendeten Ressourcenindex und einen TTI-Typ angibt oder das UE anweist, eine "Fallback"-Operation auszuführen, Folgendes umfasst:
Empfangen von zwei EAI, wobei, wenn die zwei EAI ein NACK-EAI und ein Nicht-NACK-EAI umfassen, der Nicht-NACK-EAI verwendet wird, um den von dem UE verwendeten Ressourcenindex und einen von dem durch das UE angeforderten TTI-Typ verschiedenen anderen TTI-Typ oder einen voreingestellten TTI-Typ anzugeben, und wenn die zwei EAI nicht ein NACK-EAI umfassen, die zwei EAI verwendet werden, um das UE anzuweisen, eine "Fallback"-Operation auszuführen.

5. Verfahren nach Anspruch 4, wobei das Verfahren ferner Folgendes umfasst: wenn die Zelle, in der sich das UE befindet, mit keinem EAI konfiguriert ist und der Wert des AI ein zweiter Wert ist, der von dem ersten Wert verschieden ist, Zurückweisung einer Zugangsanforderung des UE angegeben wird.

6. Verfahren nach Anspruch 4 oder 5, wobei das Verfahren ferner Folgendes umfasst:
wenn die Zelle, in der sich das UE befindet, mit einem EAI konfiguriert ist und der Wert des AI der zweite Wert ist, der von dem ersten Wert verschieden ist,
Empfangen eines EAI, der Zurückweisung der Zugangsanforderung des UE angibt oder einen von dem UE verwendeten Ressourcenindex und einen TTI-Typ angibt oder das UE anweist, eine "Fallback"-Operation auszuführen,
wobei das Empfangen eines EAI, der Zurückweisung der Zugangsanforderung des UE angibt oder einen von dem UE verwendeten Ressourcenindex und einen TTI-Typ angibt oder das UE anweist, eine "Fallback"-Operation auszuführen, Folgendes umfasst:
Empfangen eines EAI, wobei, wenn der EAI NACK ist, der EAI verwendet wird, um Zurückweisung der Zugangsanforderung des UE anzugeben, wenn der EAI nicht NACK ist, der EAI verwendet wird, um einen von dem UE verwendeten und durch den EAI abgebildeten Ressourcenindex und den durch das UE angeforderten TTI-Typ anzugeben.

7. Basisstation, umfassend:
eine Präambel-Empfangseinheit (401), ausgelegt zum Empfangen einer Zugangspräambel von einem Benutzergerät UE, wobei die Zugangspräambel eine Signatur trägt;
eine Konfigurationsbestimmungseinheit (402), ausgelegt zum Bestimmen, ob eine Zelle, in der sich das UE befindet, mit einem erweiterten Akquisitionsindikator EAI konfiguriert ist; und
eine Indikatorsendeeinheit (403), ausgelegt zum Senden eines Akquisitionsindikators AI, der der Signatur der Zugangspräambel entspricht, auf einem Akquisitionsindikatorkanal AICH eines Zugangszeitschlitzes, der einem Zugangszeitschlitz entspricht, in dem die Zugangspräambel empfangen wird; wobei wenn ein Wert des AI ein erster Wert ist, Vorgaberessourcen, die mit der Signatur der Zugangspräambel assoziiert sind, die von dem UE verwendet werden, und ein Typ des Übertragungszeitintervalls TTI, der durch das UE angefordert wird, zugeteilt und angegeben werden oder Vorgaberessourcen, die mit dem AI assoziiert sind, der der Signatur der Zugangspräambel entspricht, die von dem UE verwendet werden, und ein durch das UE angeforderter TTI-Typ zugeteilt und angegeben werden; wobei wenn die Zelle, in der sich das UE befindet, mit einem EAI konfiguriert ist und der Wert des AI ein zweiter Wert ist, der von dem ersten Wert verschieden ist, **dadurch gekennzeichnet, dass**
die Indikatorsendeeinheit ausgelegt ist zum Senden eines EAI zu dem UE, um Zurückweisung der Zugangsanforderung des UE anzugeben oder einen von dem UE verwendeten Ressourcenindex und einen TTI-Typ zuzuteilen und anzugeben oder dem UE anzugeben, eine "Fallback"-Operation auszuführen, wobei:
die Indikatorsendeeinheit ist ausgelegt zum Senden von zwei EAI, wobei, wenn die zwei EAI ein NACK-EAI und ein Nicht-NACK-EAI umfassen, der Nicht-NACK-EAI verwendet wird, um den von dem UE verwendeten Ressourcenindex und einen von dem durch das UE angeforderten TTI-Typ verschiedenen anderen TTI-Typ oder einen voreingestellten TTI-Typ anzugeben, und wenn die zwei EAI nicht ein NACK-EAI umfassen, die zwei EAI verwendet werden, um das UE anzuweisen, eine "Fallback"-Operation auszuführen.

8. Basisstation nach Anspruch 7, wobei, wenn die Zelle, in der sich das UE befindet, mit keinem EAI konfiguriert ist und der Wert des AI ein zweiter Wert ist, der von dem ersten Wert verschieden ist, Zurückweisung einer Zugangsanforderung des UE angegeben wird.

9. Basisstation nach Anspruch 7 oder 8, wobei
wenn die Zelle, in der sich das UE befindet, mit einem EAI konfiguriert ist und der Wert des AI der zweite Wert ist, der von dem ersten Wert verschieden ist, die Indikatorsendeeinheit ausgelegt ist zum Senden eines EAI zu dem UE, um Zurückweisung der Zugangsanforderung des UE anzugeben oder einen von dem UE verwendeten Ressourcenindex und einen TTI-Typ zuzuteilen und anzugeben oder dem UE anzugeben, eine "Fallback"-Operation auszuführen, wobei:
die Indikatorsendeeinheit ist ausgelegt zum Senden eines EAI, wobei, wenn der EAI NACK ist, der EAI verwendet wird, um Zurückweisung der Zugangsanforderung des UE anzugeben, oder wenn der EAI nicht NACK ist, der EAI verwendet wird, um einen von dem UE verwendeten und durch den EAI abgebildeten Ressourcenindex und den durch das UE angeforderten TTI-Typ anzugeben.

10. Benutzergerät, **dadurch gekennzeichnet, dass** es Folgendes umfasst:
eine Präambelsendeeinheit (501), ausgelegt zum Senden einer Zugangspräambel zu einer Basisstation, wobei die Zugangspräambel eine Signatur trägt;
eine Konfigurationsbestimmungseinheit (502), ausgelegt zum Bestimmen, ob eine Zelle, in der sich das Benutzergerät UE befindet, mit einem erweiterten Akquisitionsindikator EAI konfiguriert ist; und
eine Indikatorempfangseinheit (503), ausgelegt zum Empfangen eines Akquisitionsindikators AI von der Basisstation und entsprechend der Signatur der Zugangspräambel auf einem Akquisitionsindikatorkanal AICH eines Zugangszeitschlitzes, der einem Zugangszeitschlitz entspricht, in dem die Zugangspräambel gesendet wird; wobei
wenn ein Wert des AI ein erster Wert ist, Vorgaberessourcen, die mit der Signatur der Zugangspräambel assoziiert sind, die von dem UE verwendet werden, und ein durch das UE angeforderter Typ des Übertragungszeitintervalls TTI angegeben werden oder Vorgaberessourcen, die mit dem AI assoziiert sind, der der Signatur der Zugangspräambel entspricht, die von dem UE verwendet werden, und ein durch das UE angeforderter TTI-Typ zugeteilt und angegeben werden, wobei, wenn die Zelle, in der sich das UE befindet, mit einem EAI konfiguriert ist und der Wert des AI ein zweiter Wert ist, der von dem ersten Wert verschieden ist, die Indikatorempfangseinheit ausgelegt ist zum Empfangen eines EAI, der Zurückweisung der Zugangsanforderung des UE angibt oder einen von dem UE verwendeten Ressourcenindex und einen TTI-Typ angibt oder das UE anweist, eine "Fallback"-Operation auszuführen, wobei:
die Indikatorempfangseinheit ist ausgelegt zum Empfangen eines EAI, wobei, wenn der EAI NACK ist, der EAI verwendet wird, um Zurückweisung der Zugangsanforderung des UE anzugeben, oder wenn der EAI nicht NACK ist, der EAI verwendet wird, um einen von dem UE verwendeten und durch den EAI abgebildeen Ressourcenindex und den durch das UE angeforderten TTI-Typ anzugeben; und
die Indikatorempfangseinheit ausgelegt ist zum Empfangen von zwei EAI, wobei, wenn die zwei EAI ein NACK-EAI und ein Nicht-NACK-EAI umfassen, der Nicht-NACK-EAI verwendet wird, um den von dem UE verwendeten Ressourcenindex und einen von dem durch das UE angeforderten TTI-Typ verschiedenen anderen TTI-Typ oder einen voreingestellten TTI-Typ anzugeben, und wenn die zwei EAI nicht ein NACK-EAI umfassen, die zwei EAI verwendet werden, um das UE anzuweisen, eine "Fallback"-Operation auszuführen.

11. Benutzergerät nach Anspruch 10, wobei, wenn die Zelle, in der sich das UE befindet, mit keinem EAI konfiguriert ist und der Wert des AI ein zweiter Wert ist, der von dem ersten Wert verschieden ist, Zurückweisung einer Zugangsanforderung des UE angegeben wird.

## Revendications

1. Procédé d'indication d'un intervalle de temps de transmission, comprenant :
la réception (101) d'un préambule d'accès depuis un équipement utilisateur, UE, le préambule d'accès renfermant une signature ; et
la détermination (102) qu'une cellule dans laquelle se trouve l'équipement UE est configurée ou non avec un indicateur d'acquisition étendu, EAI, et l'envoi, sur un canal d'indicateur d'acquisition, AICH, d'une tranche de temps d'accès correspondant à une tranche de temps d'accès dans laquelle le préambule d'accès est reçu, d'un indicateur d'acquisition, AI, correspondant à la signature du préambule d'accès ; dans lequel si une valeur de l'indicateur AI est une première valeur, des ressources par défaut associées à la signature du préambule d'accès qui sont utilisées par l'équipement UE et un type d'intervalle de temps de transmission, TTI, demandé par l'équipement UE sont attribués et indiqués, ou des ressources par défaut associées à l'indicateur AI correspondant à la signature du préambule d'accès qui sont utilisées par l'équipement UE et un type de TTI demandé par l'équipement UE sont attribués et indiqués, dans lequel le procédé comprend en outre : si la cellule dans laquelle se trouve l'équipement UE est configurée avec un indiacteur EAI et la valeur de l'indicateur AI est une seconde valeur différente de la première valeur, l'envoi d'un indicateur EAI à l'équipement UE pour indiquer le rejet de la requête d'accès de l'équipement UE, ou attribuer et indiquer un indice de ressources utilisé par l'équipement UE et un type de TTI, ou indiquer à l'équipement UE d'exécuter une opération de repli, **caractérisé en ce que** :
l'envoi d'un indicateur EAI à l'équipement UE pour indiquer le rejet de la requête d'accès de l'équipement UE, ou attribuer et indiquer un indice de ressources utilisé par l'équipement UE et un type de TTI, ou indiquer à l'équipement UE d'exécuter une opération de repli comprend :
l'envoi de deux indicateurs EAI à l'équipement UE, dans lequel si les deux indicateurs EAI comprennent un indicateur EAI de non-acquittement, NACK EAI, et un indicateur EAI non de non-acquittement, non-NACK EAI, l'indicateur non- NACK EAI est utilisé pour indiquer l'indice de ressources utilisé par l'équipement UE, et un autre type de TTI différent du type de TTI demandé par l'équipement UE, ou un type de TTI préétabli, si les deux indicateurs EAI ne comprennent pas d'indicateur NACK EAI, les deux indicateurs EAI sont utilisés pour instruire l'équipement UE d'exécuter une opération de repli.

2. Procédé selon la revendication 1, le procédé comprenant en outre : si la cellule dans laquelle se trouve l'équipement UE est configurée sans indicateur EAI et que la valeur de l'indicateur AI est une seconde valeur, différente de la première valeur, le rejet d'une requête d'accès de l'équipement UE est indiqué.

3. Procédé selon la revendication 1 ou 2, le procédé comprenant en outre : si la cellule dans laquelle se trouve l'équipement UE est configurée avec un indicateur EAI et que la valeur de l'indicateur AI est la seconde valeur, différente de la première valeur, l'envoi d'un indicateur EAI à l'équipement UE pour indiquer le rejet de la requête d'accès de l'équipement UE, ou attribuer et indiquer un indice de ressources utilisé par l'équipement UE et un type de TTI, ou indiquer à l'équipement UE d'exécuter une opération de repli,
dans lequel l'envoi d'un indicateur EAI à l'équipement UE pour indiquer le rejet de la requête d'accès de l'équipement UE, ou attribuer et indiquer un indice de ressource utilisé par l'équipement UE et un type de TTI, ou indiquer à l'équipement UE d'exécuter une opération de repli comprend :
l'envoi d'un indicateur EAI à l'équipement UE, dans lequel si l'indicateur EAI est un non-acquittement, NACK, l'indicateur EAI est utilisé pour indiquer le rejet de la requête d'accès de l'équipement UE, si l'indicateur EAI n'est pas un NACK, l'indicateur EAI est utilisé pour indiquer un indice de ressources utilisé par l'équipement UE et mis en correspondance par l'indicateur EAI et le type de TTI demandé par l'équipement UE.

4. Procédé d'indication d'un intervalle de temps de transmission, comprenant :
l'envoi d'un préambule d'accès à une station de base (201), le préambule d'accès renfermant une signature ; et la détermination qu'une cellule dans laquelle se trouve un équipement utilisateur, UE, est configurée ou non avec un indicateur d'acquisition étendu, EAI ; et
la réception (202), sur un canal d'indicateur d'acquisition, AICH, d'une tranche de temps d'accès correspondant à une tranche de temps d'accès dans laquelle le préambule d'accès est envoyé, d'un indicateur d'acquisition, AI, depuis la station de base et correspondant à la signature du préambule d'accès ; dans lequel
si une valeur de l'indicateur AI est une première valeur, des ressources par défaut associées à la signature du préambule d'accès qui sont utilisées par l'équipement UE et un type d'intervalle de temps de transmission, TTI, demandé par l'équipement UE sont indiqués, ou des ressources par défaut associées à l'indicateur AI correspondant à la signature du préambule d'accès qui sont utilisées par l'équipement UE et un type de TTI demandé par l'équipement UE sont attribués et indiqués, le procédé comprenant en outre : si la cellule dans laquelle se trouve l'équipement UE est configurée avec un indiacteur EAI et la valeur de l'indicateur AI est une seconde valeur différente de la première valeur, la réception d'un indicateur EAI qui indique le rejet de la requête d'accès de l'équipement UE, ou indique un indice de ressources utilisé par l'équipement UE et un type de TTI, ou instruit l'équipement UE d'exécuter une opération de repli, **caractérisé en ce que** :
la réception d'un indicateur EAI qui indique le rejet de la requête d'accès de l'équipement UE, ou indique un indice de ressources utilisé par l'équipement UE et un type de TTI, ou instruit l'équipement UE d'exécuter une opération de repli comprend :
la réception de deux indicateurs EAI, dans lequel si les deux indicateurs EAI comprennent un indicateur EAI de non-acquittement, NACK EAI, et un indicateur EAI non de non-acquittement, non-NACK EAI, l'indicateur non-NACK EAI est utilisé pour indiquer l'indice de ressources utilisé par l'équipement UE, et un autre type de TTI différent du type de TTI demandé par l'équipement UE, ou un type de TTI préétabli, si les deux indicateurs EAI ne comprennent pas d'indicateur NACK EAI, les deux indicateurs EAI sont utilisés pour instruire l'équipement UE d'exécuter une opération de repli.

5. Procédé selon la revendication 4, le procédé comprenant en outre : si la cellule dans laquelle se trouve l'équipement UE est configurée sans indicateur EAI et que la valeur de l'indicateur AI est une seconde valeur, différente de la première valeur, le rejet d'une requête d'accès de l'équipement UE est indiqué.

6. Procédé selon la revendication 4 ou 5, le procédé comprenant en outre : si la cellule dans laquelle se trouve l'équipement UE est configurée avec un indicateur EAI et que la valeur de l'indicateur AI est la seconde valeur, différente de la première valeur,
la réception d'un indicateur EAI qui indique le rejet de la requête d'accès de l'équipement UE, ou indique un indice de ressources utilisé par l'équipement UE et un type de TTI, ou instruit l'équipement UE d'exécuter une opération de repli,
dans lequel la réception d'un indicateur EAI qui indique le rejet de la requête d'accès de l'équipement UE, ou indique un indice de ressources utilisé par l'équipement UE et un type de TTI, ou instruit l'équipement UE d'exécuter une opération de repli comprend
la réception d'un indicateur EAI, dans lequel si l'indicateur EAI est un non-acquittement, NACK, l'indicateur EAI est utilisé pour indiquer le rejet de la requête d'accès de l'équipement UE, si l'indicateur EAI n'est pas un NACK, l'indicateur EAI est utilisé pour indiquer un indice de ressource utilisé par l'équipement UE et mis en correspondance par l'indicateur EAI et le type de TTI demandé par l'équipement UE.

7. Station de base, comprenant :
une unité de réception de préambule (401), configurée pour recevoir un préambule d'accès depuis un équipement utilisateur, UE, le préambule d'accès renfermant une signature ;
une unité de détermination de configuration (402), configurée pour déterminer qu'une cellule dans laquelle se trouve l'équipement UE est configurée ou non avec un indicateur d'acquisition étendu, EAI ; et
une unité d'envoi d'indicateur (403), configurée pour envoyer, sur un canal d'indicateur d'acquisition, AICH, d'une tranche de temps d'accès correspondant à une tranche de temps d'accès dans laquelle le préambule d'accès est reçu, un indicateur d'acquisition, AI, correspondant à la signature du préambule d'accès ; dans laquelle si une valeur de l'indicateur AI est une première valeur, des ressources par défaut associées à la signature du préambule d'accès qui sont utilisées par l'équipement UE et un type d'intervalle de temps de transmission, TTI, demandé par l'équipement UE sont attribués et indiqués, ou des ressources par défaut associées à l'indicateur AI correspondant à la signature du préambule d'accès qui sont utilisées par l'équipement UE et un type de TTI demandé par l'équipement UE sont attribués et indiqués, dans laquelle :
si la cellule dans laquelle se trouve l'équipement UE est configurée avec un indiacteur EAI et la valeur de l'indicateur AI est une seconde valeur différente de la première valeur, **caractérisée en ce que** :
l'unité d'envoi d'indicateur est configurée pour envoyer un indicateur EAI à l'équipement UE pour indiquer le rejet de la requête d'accès de l'équipement UE, ou attribuer et indiquer un indice de ressources utilisé par l'équipement UE et un type de TTI, ou indiquer à l'équipement UE d'exécuter une opération de repli, dans lequel l'unité d'envoi d'indicateur est configurée pour envoyer deux indicateurs EAI, dans laquelle si les deux indicateurs EAI comprennent un indicateur EAI de non-acquittement, NACK EAI, et un indicateur EAI non de non-acquittement, non-NACK EAI, l'indicateur non-NACK EAI est utilisé pour indiquer l'indice de ressources utilisé par l'équipement UE, et un autre type de TTI différent du type de TTI demandé par l'équipement UE, ou un type de TTI préétabli, si les deux indicateurs EAI ne comprennent pas d'indicateur NACK EAI, les deux indicateurs EAI sont utilisés pour instruire l'équipement UE d'exécuter une opération de repli.

8. Station de base selon la revendication 7, dans laquelle si la cellule dans laquelle se trouve l'équipement UE est configurée sans indicateur EAI et que la valeur de l'indicateur AI est une seconde valeur, différente de la première valeur, le rejet d'une requête d'accès de l'équipement UE est indiqué.

9. Station de base selon la revendication 7 ou 8, dans laquelle :
si la cellule dans laquelle se trouve l'équipement UE est configurée avec un indicateur EAI et que la valeur de l'indicateur AI est la seconde valeur, différente de la première valeur,
l'unité d'envoi d'indicateur est configurée pour envoyer un indicateur EAI à l'équipement UE pour indiquer le rejet de la requête d'accès de l'équipement UE, ou attribuer et indiquer un indice de ressources utilisé par l'équipement UE et un type de TTI, ou indiquer à l'équipement UE d'exécuter une opération de repli, dans lequel l'unité d'envoi d'indicateur est configurée pour envoyer un indicateur EAI, dans laquelle si l'indicateur EAI est un non-acquittement, NACK, l'indicateur EAI est utilisé pour indiquer le rejet de la requête d'accès de l'équipement UE, ou si l'indicateur EAI n'est pas un NACK, l'indicateur EAI est utilisé pour indiquer un indice de ressources utilisé par l'équipement UE et mis en correspondance par l'indicateur EAI et le type de TTI demandé par l'équipement UE.

10. Equipement utilisateur, **caractérisé en ce qu'**il comprend :
une unité d'envoi de préambule (501), configurée pour envoyer un préambule d'accès à une station de base, le préambule d'accès renfermant une signature ;
une unité de détermination de configuration (502), configurée pour déterminer qu'une cellule dans laquelle se trouve l'équipement UE est configurée ou non avec un indicateur d'acquisition étendu, EAI ; et
une unité de réception d'indicateur (503), configurée pour recevoir, sur un canal d'indicateur d'acquisition, AICH, d'une tranche de temps d'accès correspondant à une tranche de temps d'accès dans laquelle le préambule d'accès est envoyé, un indicateur d'acquisition, AI, depuis la station de base et correspondant à la signature du préambule d'accès ; dans lequel
si une valeur de l'indicateur AI est une première valeur, des ressources par défaut associées à la signature du préambule d'accès qui sont utilisées par l'équipement UE et un type d'intervalle de temps de transmission, TTI, demandé par l'équipement UE sont indiqués, ou des ressources par défaut associées à l'indicateur AI correspondant à la signature du préambule d'accès qui sont utilisées par l'équipement UE et un type de TTI demandé par l'équipement UE sont attribués et indiqués, dans lequel si la cellule dans laquelle se trouve l'équipement UE est configurée avec un indiacteur EAI et la valeur de l'indicateur AI est une seconde valeur différente de la première valeur, l'unité de réception d'indicateur est configurée pour recevoir un indicateur EAI qui indique le rejet de la requête d'accès de l'équipement UE, ou indique un indice de ressources utilisé par l'équipement UE et un type de TTI, ou instruit l'équipement UE d'exécuter une opération de repli, dans lequel
l'unité de réception d'indicateur est configurée pour recevoir un indicateur EAI, dans lequel si l'indicateur EAI est un non-acquittement, NACK, l'indicateur EAI est utilisé pour indiquer le rejet de la requête d'accès de l'équipement UE, ou si l'indicateur EAI est non-NACK, l'indicateur EAI est utilisé pour indiquer un indice de ressources utilisé par l'équipement UE et mis en correspondance par l'indicateur EAI et le type de TTI demandé par l'équipement UE ; et
l'unité de réception d'indicateur est configurée pour recevoir deux indicateurs EAI, dans lequel si les deux indicateurs EAI comprennent un indicateur EAI de non-acquittement, NACK EAI, et un indicateur EAI non de non-acquittement, non-NACK EAI, l'indicateur non-NACK EAI est utilisé pour indiquer l'indice de ressources utilisé par l'équipement UE, et un autre type de TTI différent du type de TTI demandé par l'équipement UE, ou un type de TTI préétabli, si les deux indicateurs EAI ne comprennent pas d'indicateur NACK EAI, les deux indicateurs EAI sont utilisés pour instruire à l'équipement UE d'exécuter une opération de repli.

11. Equipement utilisateur selon la revendication 10, dans lequel si la cellule dans laquelle se trouve l'équipement UE est configurée sans indicateur EAI et que la valeur de l'indicateur AI est une seconde valeur, différente de la première valeur, le rejet d'une requête d'accès de l'équipement UE est indiqué.
